# EUROPEAN PATENT SPECIFICATION

(11) **EP 3 807 463 B1**
(45) Date of publication and mention of the grant of the patent: **17.01.2024**
(21) Application number: 19740648.1
(22) Date of filing: 12.06.2019
(51) Int. Cl.: E01C 11/26, F24T 50/00

(54) **ROAD PAVEMENT HEATING AND TEMPERATURE MAINTENANCE SYSTEM**
STRASSENDECKEN HEIZUNGS- UND TEMPERATURERHALTUNGSYSTEM
SYSTÈME DE CHAUFFAGE ET DE MAINTIEN DE TEMPÉRATURE DE REVÊTEMENT ROUTIER

(30) Priority: 13.06.2018 IT 201800006294
(43) Date of publication of application: 21.04.2021
(73) Proprietor: Battisti, Lorenzo, 38122 Trento (IT)
(72) Inventor: BATTISTI, Lorenzo, 38121 Trento (TN) (IT)
(74) Representative: Brunacci, Marco
(86) International application number: PCT/IB2019/054913
(87) International publication number: WO 2019/239344

(56) References cited:
- CN-A- 101 260 640
- DE-A1-102011 077 650
- JP-A- H0 959 912
- KR-A- 20130 134 250
- KR-A- 20160 020 609

## Description

### Technical Field

The present invention relates to a system for the heating and maintenance in temperature of road pavements.

### Background Art

It is well known that road pavements are subject to wide changes in temperature due to daily temperature fluctuations and the alternation of the seasons.

The climatic zones in which the pavement is located together with the altitude are among the factors that influence the temperature changes which the pavement itself undergoes.

For example, pavements exposed to subzero temperatures and substantially constant wettability conditions, such as mountain areas, are particularly prone to ice formation, making transit over the pavements themselves extremely dangerous.

At the same time, in summer, such pavements undergo sudden increases in temperature that cause deformation of the pavements themselves, especially when the latter are subject to loads, such as in the case, for example, of heavy vehicles such as trucks or the like moving over them.

In general, daily and seasonal thermal gradients induce compressive and tensile stresses both on the road pavement and on the supporting building structures of the latter.

Generally, road pavements rest on supporting structures such as viaducts, bridges, or alternatively rest directly on the ground through the interposition of supporting layers of different thicknesses depending on the geotechnical characteristics of the underlying soil and its constituent materials.

It should be noticed that temperature changes introduce additional dynamic loads only partially foreseen during the calculation and construction phase of both the pavement supporting structures and the pavements themselves.

From a thermo-mechanical point of view, the extent of the thermal gradient which the supporting structures undergo, together with the pavements, has a considerable impact on their durability.

In this regard, the maximum operating temperatures are difficult to control, and the methods currently in use do not permit reducing them.

In fact, the larger the thermal gradient which both the supporting building structures and the pavements have to undergo, the more the processes of deterioration of the same are speeded up.

In order to overcome the above problems, at least in part, different methods of preventing ice formation are currently in use.

A first method consists of spreading sodium chloride on the pavements subject to sub-zero temperatures.

Nevertheless, the use of sodium chloride is totally ineffective at surface temperatures below -4°C.

A second method involves the application of calcium chloride which, although effective at temperatures below -4°C, has significant operating costs.

To this must be added the fact that calcium chloride has a corrosive effect on the surfaces it comes into contact with.

In particular, the water in which the calcium chloride is dissolved as a result of the melting of the ice tends to infiltrate into the surface cracks of the pavement, or of the supporting structures of the latter.

Nevertheless, although concrete or steel is not chemically attacked by calcium chloride, the salt water in which it is dissolved has longer evaporation times than pure water, significantly speeding up the corrosion processes of the supporting elements or of the road pavement.

It is easy to appreciate how the speeding up of corrosion processes significantly increases the number of maintenance operations, significantly increasing the cost of pavement maintenance.

Moreover, the speeding up of corrosion processes due to the long evaporation times of salt water containing calcium chloride triggers prolonged oxidation phenomena.

Such oxidation phenomena are particularly aggressive with respect to structural steel reinforcement elements generally present in the supporting structures, such as bridges, causing a considerable reduction of the available resistant section over time.

Such section reductions cause the formation of tensions higher than those normally calculated and acceptable for the aforementioned building structures, significantly increasing the risk of damaging their structural integrity, and consequently the risk of accidents while driving over the pavements they support.

In addition, the prolonged use over time of salts, such as sodium chloride or calcium chloride, has a polluting effect on the environment surrounding the treated pavements, together with the risk of contamination of the groundwater present in the environment surrounding the pavements themselves.

In order to overcome the aforementioned problems, at least in part, heating systems have been developed for the pavements which exploit shallow geothermal energy.

Such systems comprise a single exchanger assembly comprising a heat-carrying fluid which flows inside a transmission circuit associated with the pavement and which is adapted to transfer and/or absorb heat to/from the latter.

JP H 0 959 912 A shows a system for controlling and melting snow according to the preamble of claim 1.

During the summer season, when the surface temperature is higher than the geothermal temperature, the subsoil acts as a reservoir to collect thermal energy absorbed by the pavement.

Under such conditions, the heat-carrying fluid absorbs heat from the pavement and transfers it to the exchanger assembly, cooling down the pavement itself. On the contrary, during the winter season the subsoil has a geothermal temperature higher than atmospheric temperature, and therefore also higher than the surface temperature.

In this case, the heat-carrying flow transfers heat to the pavement, heating it up. Nevertheless, this system too has numerous drawbacks linked to the fact that a single exchanger assembly is not sufficient to offset the changes in surface temperature which the pavement has to undergo.

In other words, the presence of a single exchanger assembly can be completely ineffective in the face of a succession of cyclic thermal loads which alternate during the day and the seasons.

In fact, it is extremely complex to predict the actual heat flows involved due to the lack of accurate historical data, or due to the succession of exceptional events.

Because such thermal loads are not cancelled out, or at least offset by the heat exchange of the heat-carrying fluid with the pavement, they are added to the static and dynamic mechanical loads which the supporting structures and the pavements they support have to undergo, considerably increasing the risk of collapse and accidents.

### Description of the Invention

The main aim of the present invention is to provide a system for the heating and maintenance in temperature of road pavements which permits equalizing the surface temperature of the pavement regardless of the succession of seasons and daily temperature changes, comprising in the presence of extreme phenomena. Within this aim, one of the objects of the present invention is to provide a system for the heating and maintenance in temperature of road pavements which makes it possible to prevent the formation of ice, ensuring over time chemical-physical conditions which prevent such formation, greatly increasing the road safety standards of the pavements.

Another object of the present invention is to provide a system for the heating and maintenance in temperature of road pavements which is adaptable to climatic changes, significantly reducing the drying time of the pavement itself after rain.

Yet another object of the present invention is to provide a system for the heating and maintenance in temperature of road pavements which eliminates the problems related to the environmental pollution resulting from the use of chemicals for the prevention of ice formation.

A further object of the present invention is to provide a system for the heating and maintenance in temperature of road pavements which makes it possible to reduce the processes of oxidation and wear of the pavement and its supporting structures, significantly cutting maintenance costs.

Another object of the present invention is to provide a system for the heating and maintenance in temperature of road pavements which allows overcoming the mentioned drawbacks of the prior art in a simple, rational, easy, effective to use and cost effective solution.

The aforementioned objects are achieved by the present system for the heating and maintenance in temperature of road pavements having the characteristics of claim 1.

### Brief Description of the Drawings

Other characteristics and advantages of the present invention will be more evident from the description of a preferred, but not exclusive, embodiment of a system for the heating and maintenance in temperature of road pavements, illustrated by way of an indicative, yet non-limiting example, in the attached tables of drawings in which:
Figure 1 is a schematic representation of the system according to the invention in an accumulation configuration;
Figure 2 is a schematic representation of the system according to the invention in an off-set configuration;

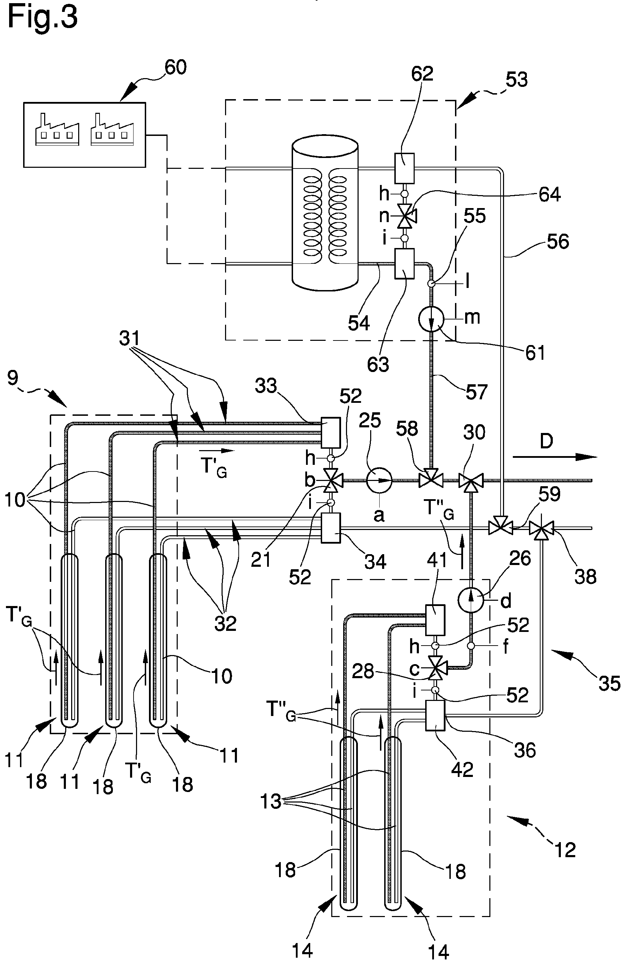

Figure 3 is a schematic representation of the system according to the invention in accordance with an alternative embodiment solution;

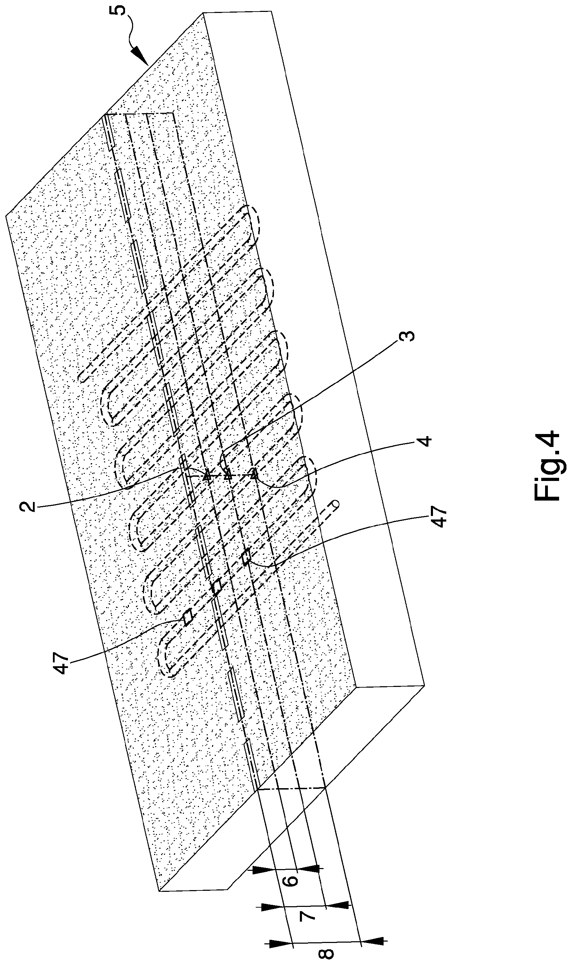

Figure 4 is an axonometric view of the pavement of the system according to the invention;
Figures 5-8 schematically illustrate the alarm means in an operative configuration.

### Embodiments of the Invention

With particular reference to these illustrations, reference numeral 1 globally indicates a system for the heating and maintenance in temperature of road pavements.

The system 1 comprises detection means 2, 3, 4 for detecting the temperature associated with a road pavement 5 and configured to detect at least one surface temperature value Ts.

Preferably, the detection means 2, 3, 4 comprise a plurality of temperature sensors.

With reference to the particular embodiment shown in the illustrations, the plurality of temperature sensors 2, 3, 4 comprises:
- a first sensor 2 associated with the pavement 5 at a first predefined depth 6;
- a second sensor 3 associated with the pavement 5 at a second predefined depth 7;
- a third sensor 4 associated with the pavement 5 at a third predefined depth 8.

Preferably, the first depth 6, the second depth 7 and the third depth 8 are different from each other.

It cannot however be ruled out that the first depth 6, the second depth 7 and the third depth 8 are equal to each other; in this case, the first sensor 2, the second sensor 3 and the third sensor 4 lie on a plane coinciding with each other. Furthermore, the system 1 comprises a first buried exchanger assembly 9 and comprising a first heat-carrying fluid 10 adapted to exchange heat with the subsoil.

Preferably, the first exchanger assembly 9 is buried at a distance of more than 5 m from the pavement 5.

The first exchanger assembly 9 comprises first geothermal probes 11; in particular, the first geothermal probes 11 are placed at predefined and different depths respectively.

Alternatively, as shown in the illustrations, the first geothermal probes 11 are placed at the same depth but have different longitudinal extensions.

In order to measure the temperature of the first heat-carrying fluid 10, the system 1 comprises a first detection sensor 15 associated with the first exchanger assembly 9, i.e. with the first geothermal probes 11, and is configured to measure a first offset temperature T'c of the first heat-carrying fluid itself.

Furthermore, the system 1 comprises a second exchanger assembly 12 and this in turn comprises a second heat-carrying fluid 13 adapted to exchange heat with the subsoil.

According to a preferred embodiment shown in the illustrations, similarly to the first exchanger assembly 9, the second exchanger assembly 12 is also buried and comprises second geothermal probes 14.

It cannot however be ruled out that the second exchanger assembly 12 be above ground or partially buried.

Advantageously, such second geothermal probes 14 are located at predefined and different depths respectively.

Alternatively, as shown in the illustrations, the second geothermal probes 14 are placed at the same depth and have different lengths.

In other words, the depth at which the second geothermal probes 14 are placed being equal, the latter have different longitudinal extensions; this allows absorbing heat from the subsoil at in any case different depths.

Preferably, the first exchanger assembly 9, i.e. the first geothermal probes 11, and the second exchanger assembly 12, i.e. the second geothermal probes 14, are placed at predefined and different depths.

Alternatively, the first exchanger assembly 9 and the second exchanger assembly 12 are placed at the same depth.

The first geothermal probes 11 and the second geothermal probes 14 are of a type known to the expert in the field.

Preferably, the first geothermal probes 11 and the second geothermal probes 14 are of the closed-circuit type.

Moreover, an alternative embodiment solution cannot be ruled out wherein the second exchanger assembly 12 is associated with heat introduction means 60. Such introduction means 60 comprise heat recovery means for recovering heat from at least one of the heating systems, waste collection tanks, exhaust gas discharge ducts.

Furthermore, it cannot be ruled out that the system 1 comprises the second exchanger assembly 12 with the respective second geothermal probes, and that at least one of the delivery duct 19 and the return duct 20 be associated with the heat introduction means 60.

In other words, the use of heat deriving from the subsoil in combination with waste heat flows cannot not ruled out from the scope of the present treatise.

In more detail, at least one of the second delivery sections 39 and the second return sections 40 are associated with the heat introduction means 60.

The system 1 also comprises a second detection sensor 16 associated with the second exchanger assembly 12, connected to a processing and control unit 17, described in detail in the rest of the present treatise, and configured to detect a second offset temperature T"c of the second heat-carrying fluid 13.

As shown in the illustrations, the first geothermal probes 11 and the second geothermal probes 14 comprise a hollow body 18 with a substantially U-shape. The hollow body 18 is made of high heat-transmittance materials and is crossed by the first heat-carrying fluid 10 and by the second heat-carrying fluid 13 respectively.

According to the invention, the system 1 also comprises a heat transmission circuit 19, 20 connected to at least the first exchanger assembly 9, i.e. to the first geothermal probes 11, and to the pavement 5.

The first heat-carrying fluid 10 flows inside the transmission circuit 19, 20 and is adapted to exchange heat with the pavement 5.

In other words, the first heat-carrying fluid 10 flows inside the transmission circuit 19, 20 transmitting, or absorbing, heat from the pavement 5 according to the surface temperature Ts of the latter.

In detail, the transmission circuit 19, 20 comprises a delivery duct 19 connected to at least one of the first exchanger assembly 9 and the second exchanger assembly 12, and to the pavement 5, and a return duct 20 connected to the pavement 5 and to at least one of the first exchanger assembly 9 and the second exchanger assembly 12.

The delivery duct 19 and the return duct 20 are connected to each other by interposition of the first valve means 21 operationally connected to the processing and control unit 17.

Furthermore, the transmission circuit 19, 20 comprises a coil 22 located below the pavement 5 and having a first portion 23 associated with the delivery duct 19 and a second portion 24 associated with the return duct 20.

The coil 22 extends along the whole length of the pavement 5 in order to ensure an exchange surface evenly distributed below the pavement itself.

The first valve means 21 can be switched between an opening configuration wherein the delivery duct 19 and the return duct 20 are in fluidic communication with each other, and a closing configuration wherein the delivery duct 19 is isolated from the return duct 20.

The first heat-carrying fluid 10 and the second heat-carrying fluid 13 flow inside the delivery duct 19 and the return duct 20 defining a direction of forward movement D.

With reference to the particular embodiment shown in the illustrations, the direction of forward movement D of the first heat-carrying fluid 10 and of the second heat-carrying fluid 13 inside the transmission circuit 19, 20 is clockwise. In an alternative embodiment, the direction of forward movement D of the first heat-carrying fluid 10 and of the second heat-carrying fluid 13 inside the transmission circuit 19, 20 is counter-clockwise.

In this regard, the transmission circuit 19, 20 comprises pumping means 25, 26 associated with at least one of the delivery duct 19 and the return duct 20. (Meaning that the pumping means can provide for the reversal of the direction of flow inside the transmission circuit).

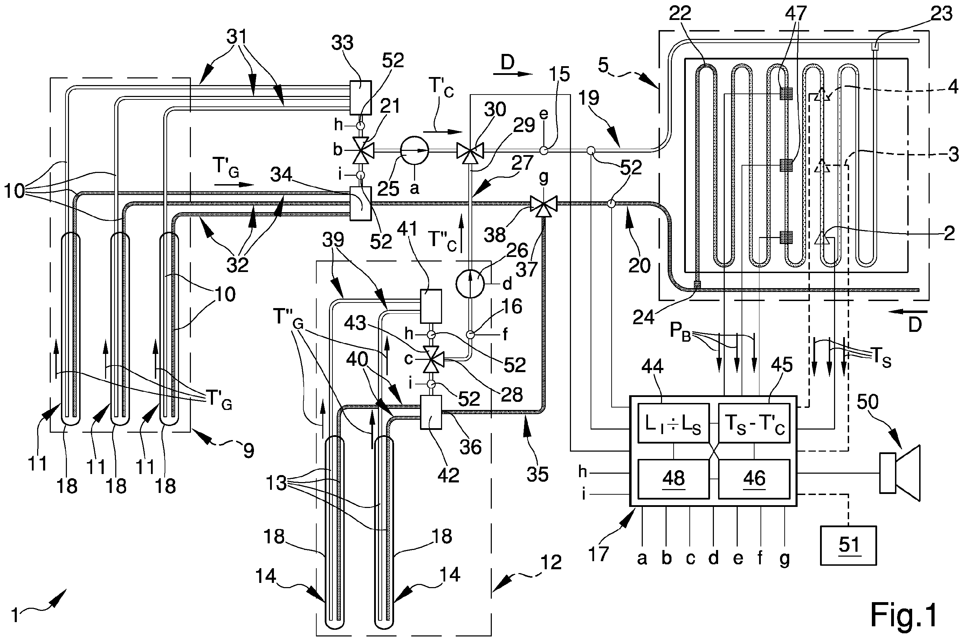

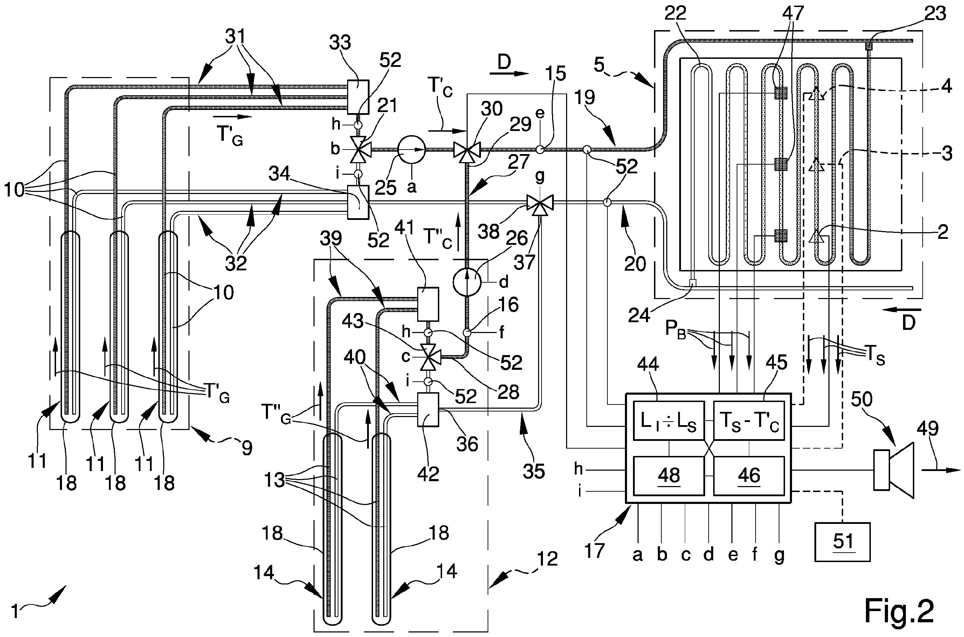

As shown in Figures 1 and 2, the pumping means 25, 26 comprise a first pumping element 25 associated with the delivery duct 19.

The direction of forward movement D is determined by the activation of the pumping means.

In other words, the pumping means 25, 26 are adapted to change the direction of forward movement D, clockwise or counter-clockwise, of the first heat-carrying fluid 10 and of the second heat-carrying fluid 13 inside the delivery duct 19 and the return duct 20, respectively.

According to the invention, the transmission circuit 19, 20 comprises mixing means 30 connected to the second exchanger assembly 12 and which can be activated to allow the mixing of the first heat-carrying fluid 10 with the second heat-carrying fluid 13.

The mixing means 30 are of a type known to the expert in the field. For example, the mixing means 30 are of the type of a three-way valve.

With reference to a preferred embodiment solution, the delivery duct 19 is connected to the first exchanger assembly 9 and to the second exchanger assembly 12.

In detail, the delivery duct 19 is connected to the second exchanger assembly 12 by interposition of an auxiliary delivery duct 27.

The auxiliary delivery duct 27 comprises a first extremity 28 associated with the second exchanger assembly 12, i.e. with the second geothermal probes 14, and a second extremity 29 associated with the delivery duct 19.

More in detail, the second extremity 29 is connected at the inlet to the mixing means 30.

Furthermore, the pumping means 25, 26 comprise a second pumping element 26 associated with the auxiliary delivery duct 27.

The first geothermal probes 11 are connected to the delivery duct 19 and to the return duct 20 by means of the first delivery sections 31 and of the first return sections 32 respectively.

Each of the first geothermal probes 11 comprises the first delivery section 31 connected to the delivery duct 19, and the first return section 32 is connected to the return duct 20.

The first heat-carrying fluid 10 in each first delivery section 31 has a first geothermal temperature T'_{G}.

In this regard, the transmission circuit 19, 20 comprises first equalizing means 33, 34 of the first geothermal temperatures T'_{G} connected at the inlet to at least one of the first delivery sections 31 and the first return sections 32, and at the outlet to the delivery duct 19.

The aforementioned first equalizing means 33, 34 are configured to define a first geothermal temperature T'_{G}.

With reference to the particular embodiment solution shown in the illustrations, the transmission circuit 19, 20 comprises a first delivery equalizing device 33 connected at the inlet to the first delivery sections 31 and at the outlet to the first valve means 21, and a first return equalizing device 34 connected at the inlet to the first return sections 32 and at the outlet to the first valve means 21.

The first valve means 21 can be activated to allow the mixing of the first heat-carrying fluid 10 contained in the delivery duct 19 coming out of the first geothermal probes 11 with the first heat-carrying fluid 10 contained in the return duct 20 entering the first geothermal probes 11.

It is therefore the first heat-carrying fluid 10 coming out of the first valve means 21 to have the first offset temperature T' c.

At the same time, the return duct 20 is connected to the second exchanger assembly 12 by interposition of an auxiliary return duct 35.

Like the auxiliary delivery duct 27, the auxiliary return duct 35 also comprises a first extremal portion 36 connected to the second exchanger assembly 12, i.e. to the second geothermal probes 14, and a second extremal portion 37 connected to the return duct 20.

Preferably, the return duct 20 and the auxiliary return duct 35 are connected to each other by interposition of auxiliary valve means 38.

The auxiliary valve means 38 are operationally connected to the processing and control unit 17 and can be activated by the latter between an active configuration wherein the delivery duct 19 and the auxiliary delivery duct 27 are in fluidic connection with each other, and an inactive configuration wherein the delivery duct 19 and the auxiliary delivery duct 27 are isolated from each other.

As with the first geothermal probes 11, each of the second geothermal probes 14 comprises a second delivery section 39 connected to the respective second geothermal probe 14, and to the delivery duct 19, and a second return section 40 connected to the respective second geothermal probe itself and to the return duct 20.

The second heat-carrying fluid 13 in each second delivery section 39 of the second geothermal probes 14 has a second geothermal temperature T"_{G}.

In this case too, the transmission circuit 19, 20 comprises second equalizing means 41, 42 of the second geothermal probes T"_{G} connected at the inlet to each of the second delivery sections 39, and at the outlet to the delivery duct 19, and configured to define the second offset temperature T"c.

The second equalizing means 41, 42 comprise a second delivery equalizing device 41 connected at the inlet to the second delivery sections 39 and at the outlet to the second valve means 43, and a second return equalizing device 42 connected at the inlet to the second return sections 40 and at the outlet to the second valve means 43.

In this case, the transmission circuit 19, 20 comprises the second valve means 43 operationally connected to the processing and control unit 17 and switchable between an operating configuration in which the second return sections 40 and the second delivery sections 39 are in fluidic communication with each other, and a stop configuration in which the second delivery sections 39 and the second return sections 40 are isolated from each other.

In other words, the second heat-carrying fluid 13 coming out of the second valve means 43 has the second offset temperature T"c.

The activation of the second valve means 43 in the operating configuration makes it possible to mix the second heat-carrying fluid 13, which flows in the second delivery sections 39, with the second heat-carrying fluid 13, which flows in the second return sections 40.

The presence of the mixing means 30, of the first valve means 21 and of the second valve means 43 is adapted to allow the modulation of the mixing of the first heat-carrying fluid 10 with the second heat-carrying fluid 13.

According to the invention, the processing and control unit 17 is operationally connected to the detection means 2, 3, 4, in this case to the plurality of sensors, to the first detection sensor 15, to the second detection sensor 16 and to the mixing means 30.

In detail, the processing and control unit 17 comprises a storage unit 44 for storing a lower limit temperature value L_{I} and/or an upper limit temperature value Ls; the processing and control unit 17 is configured to command the transmission circuit 19, 20 to keep the surface temperature Ts between the lower limit value L_{I} and the upper limit value L_{S}.

In other words, the processing and control unit 17 is configured to keep the pavement 5 in isothermal or para-isothermal conditions regardless of the surface temperature Ts detected by the plurality of sensors 2, 3, 4 and of the climatic conditions.

More in detail, it cannot be ruled out that the storage unit 44 be preset with the lower limit value L_{I} only or with the upper limit value Ls, so as to ensure a surface temperature Ts higher than the lower limit value L_{I} or than the upper limit value Ls respectively.

It cannot be ruled out that the processing and control unit 17 comprise activation means for activating the pumping means 25, 26 adapted to allow the movement of the first heat-carrying fluid 10 and of the second heat-carrying fluid 13 inside the transmission circuit 19, 20 in a continuous mode, i.e., regardless of the surface temperature Ts, or in a controlled mode, i.e., according to the surface temperature Ts.

Furthermore, the processing and control unit 17 comprises an accumulation configuration (Figure 1) wherein the surface temperature Ts is higher than the first offset temperature T'_{C}, and the pavement 5 transmits heat to at least one of the first heat-carrying fluid 10 and the second heat-carrying fluid 13 entering at least one of the first exchanger assembly 9 and the second exchanger assembly 12, respectively.

In the accumulation configuration (Figure 1) at least one of the first heat-carrying fluid 10 and the second heat-carrying fluid 13 flows inside the delivery duct 19 absorbing heat from the pavement 5, and inside the return duct 20 transmitting heat to at least one of the first exchanger assembly 9 and the second exchanger assembly 12.

More specifically, with reference to the embodiment shown in the illustrations wherein the direction of forward movement D is clockwise, the first heat-carrying fluid 10 flows inside the delivery duct 19, absorbing heat from the pavement 5 which, on cooling down, transmits heat to the latter which, in turn, by flowing inside the return duct 20 transmits heat to the first exchanger assembly 9.

Once a saturation level of the first exchanger assembly 9 has been reached, i.e. when the first exchanger assembly itself has exhausted its thermal accumulation capacity, the second heat-carrying fluid 13 transmits heat to the second exchanger assembly 12.

At the same time, the processing and control unit 17 comprises an offset configuration (Figure 2) wherein the surface temperature Ts is below the first offset temperature T'_{C}, and the first heat-carrying fluid 10 coming out of the first exchanger assembly 9 transmits heat to the pavement 5.

In detail, the offset configuration (Figure 2) determines the absorption of heat by the pavement 5 when the latter has a surface temperature Ts below the first offset temperature T'_{C}.

When the processing and control unit 17 is in offset configuration (Figure 2) at least one of the first heat-carrying fluid 10 and the second heat-carrying fluid 13 flows inside the delivery duct 19 transmitting heat to the pavement 5, and inside the return duct 20 absorbing heat from at least one of the first exchanger assembly 9 and the second exchanger assembly 12.

The processing and control unit 17 comprises processing means 45 of a differential value between the surface temperature value Ts and the first offset temperature T'_{C}.

The activation of the mixing means 30 takes place after the comparison between the differential value and the limit differential value.

In this respect, the processing and control unit 17 comprises comparison means 46 preset with the limit differential value, and configured to compare the latter with the differential value; in detail, the processing and control unit 17 activates the mixing means 30 when the differential value exceeds the limit differential value.

It should be noticed that the above differential limit value is preset so as to maintain the pavement 5 at isothermal or para-isothermal conditions.

In addition, it is specified that the expression "differential limit value" refers to a preset numerical value.

It cannot however be ruled out that the expression "differential limit value" be referred to the measurement of the intensity of the change in surface temperature Ts; this means that it cannot be ruled out from the scope of the present treatise that the expression "differential limit value" be used in reference to a measurement of the thermal gradient change.

More specifically, during the winter season, it is of primary importance that the pavement 5 be kept constantly at a surface temperature Ts above 0°C. Preferably, the processing and control unit 17 is configured to keep the pavement 5 at a predefined temperature above 3°C; this means the pavement 5 is kept in such thermal conditions as to constantly prevent the formation of ice. In this respect, the system 1 comprises at least one ice presence sensor 47 associated with the pavement 5 and adapted to detect at least one wettability parameter P_{B} of the latter, and operatively connected to the processing and control unit 17.

With reference to the particular embodiment solution shown in the Figures 1 and 2, the system 1 comprises three ice presence sensors 47 associated with the pavement 5.

The ice presence sensor 47 is adapted to provide the processing of an ice risk parameter P^{I}_{R}, P^{II}_{R}, P^{III}_{R}, P^{IV}_{R}.

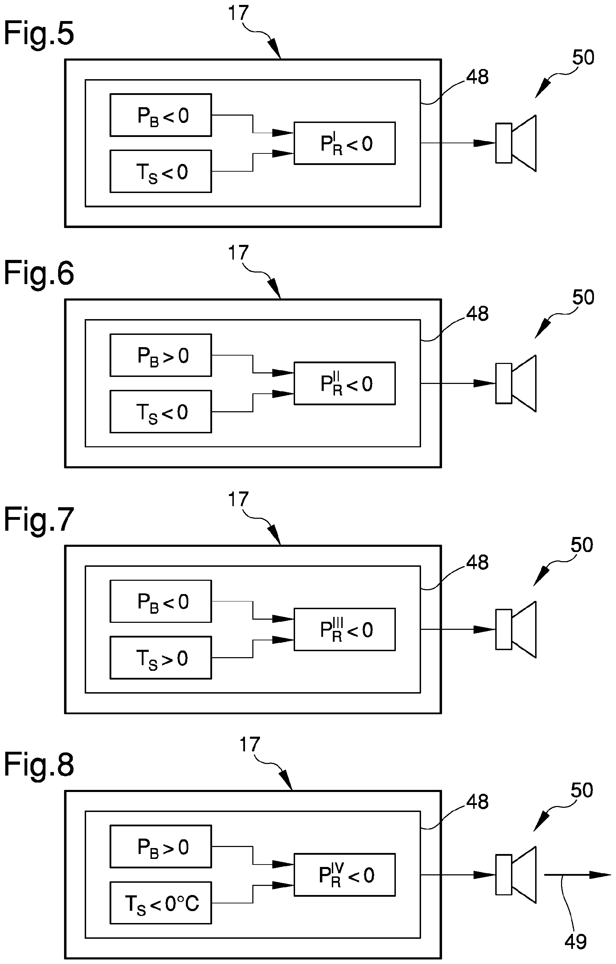

The ice risk parameter P^{I}_{R}, P^{II}_{R}, P^{III}_{R}, P^{IV}_{R} is determined by the combination of the surface temperature Ts and the wettability parameter P_{B} of the same (Figure 5-8).

In fact, the processing and control unit 17 comprises calculation means 48 for calculating the ice risk parameter P_{R} of the pavement 5.

The calculation means 48 are adapted to process a plurality of ice risk parameters P^{I}_{R}, P^{II}_{R}, P^{III}_{R}, P^{IV}_{R} comprising:
- a first negative ice risk parameter P^{I}_{R} wherein the surface temperature Ts is below 0°C and the wettability parameter P_{B} is negative;
- a second negative ice risk parameter P^{II}_{R} wherein the surface temperature Ts is below 0°C and the wettability parameter P_{B} is positive;
- a third negative ice risk parameter P^{III}_{R} wherein the surface temperature Ts is above 0°C and the wettability parameter P_{B} is negative;
- a fourth positive ice risk parameter P^{IV}_{R} wherein the surface temperature Ts is below 0°C and the wettability parameter is positive.

In case of a positive ice risk parameter P^{IV}_{R} an emergency signal 49 must be given to at least one operator so as to ensure prompt intervention on the pavement 5.

In this respect, the system comprises alarm means 50 operatively connected to the processing and control unit 17.

The alarm means 50 are adapted to send the emergency signal 49 to the operator upon receiving the fourth ice risk parameter P^{IV}_{R}.

It must be underlined that the fact cannot be ruled out of sending the emergency signal 49 to an acquisition unit provided with a user interface.

Furthermore, the presence cannot be ruled out of a remote-access control unit adapted to receive the emergency signal 49 and to send it to a receiving device of the type, e.g., of a mobile phone.

Finally, the system 1 comprises acquisition means 51 for acquiring the surface temperatures Ts measured by the detection means 2, 3, 4 and adapted to draw up a thermal map of the pavement 5.

The drawing up of the thermal map of the pavement 5 is of crucial importance for experimental and analytical purposes, and does in fact allow the precise and accurate monitoring of change in the surface temperature Ts over time.

Before a detailed explanation of the operation of the present invention is given, it is as well to specify that the transmission circuit 19, 20 comprises auxiliary detection sensors 52 associated with both the delivery duct 19 and the return duct 20.

The auxiliary detection sensors 52 are connected to the processing and control unit 17.

Before a detailed explanation of the operation of the present invention is given, it is as well to underline that an alternative embodiment solution cannot be ruled out from the scope of the present treatise wherein the system 1 comprises a third exchanger assembly 53, in turn comprising a third heat-carrying fluid 54. Preferably, the third exchanger assembly 53 is connected to the heat introduction means 60.

In the same way as the second exchanger assembly 12, the third exchanger assembly 53 is also connected to the processing and control unit 17.

At the same time, the return duct 20 is connected to the third exchanger assembly 53 by interposition of an accessory return duct 56.

The delivery duct 19 is also connected to the third exchanger assembly 53 by interposition of an accessory delivery duct 57.

More in detail, the delivery duct 19 and the return duct 20 are connected to the accessory delivery duct 57 and to the accessory return duct 56 respectively, by interposition of third valve means 58, 59.

In addition, the third exchanger assembly 53 comprises a respective third pumping element 61 adapted to direct the flow of the third heat-carrying fluid inside the accessory return duct 56.

In the same way as the first exchanger assembly 9 and the second exchanger assembly 12, the third exchanger assembly 53 also comprises third equalizing means 62, 63.

The third equalizing means 62, 63 comprise a third equalizing delivery device 62 connected to the accessory delivery duct 57, and a third equalizing return device 63 connected to the accessory return duct 56 by interposition of a valve assembly 64.

In this case too, the valve assembly 64 is connected to the processing and control unit 17.

The operation of the present invention is as follows.

The first sensor 2, the second sensor 3 and the third sensor 4 detect the surface temperature Ts and send it to the processing and control unit 17.

Regardless of the surface temperature Ts detected by the detection means 2, 3, 4, the first heat-carrying fluid 10 flows inside the transmission circuit 19, 20. With reference to the particular embodiment solution shown in the illustrations, the first heat-carrying fluid 10 flows clockwise along the direction of forward movement D.

During the winter season, the surface temperature Ts is below the first offset temperature T'_{C}.

In this case, the processing and control unit is in offset configuration (Figure 2), i.e., the first heat-carrying fluid 10 transmits heat to the pavement 5, heating it up.

In detail, the first heat-carrying fluid 10 flows inside the coil 22 entering the latter through the first portion 23, and exiting through the second portion 24. Coming out of the coil 22, the first heat-carrying fluid 10 flows inside the return duct 20 and returns to the first exchanger assembly 9.

More specifically, the first heat-carrying fluid 10 comes out of the hollow body 18 of each first geothermal probe 11 covering the first delivery sections 31 and entering the first equalizing means 33, 34.

The processing and control unit 17 activates the processing means 45 to process the differential value between the surface temperature Ts and the first offset temperature T'_{C}.

At this point, the comparison means 46 compare the preset limit differential value with the differential value.

It is as well to specify that the comparison between the differential value and the limit differential value is adapted to quantify the change in surface temperature Ts.

In other words, such comparison provides an index of the intensity of the change in surface temperature Ts, making it possible to establish the degree of mixing of the second heat-carrying fluid 13 with the first heat-carrying fluid 10. When the differential value is below the limit differential value, this means that the offset temperature T'_{C} alone is enough to ensure maintaining the surface temperature Ts between the lower limit value T_{I} and the upper limit value Ts.

In this case, the processing and control unit 17 does not activate the mixing means 30 and only the first heat-carrying fluid 10 flows inside the transmission circuit 19, 20.

More specifically, the first heat-carrying fluid 10 exits from the first exchanger assembly 9, flowing through the delivery duct 19 it enters the coil 22, exits from the latter entering the return duct 20 and, finally again reaches the first exchanger assembly 9.

Instead, when the differential value is higher than the limit differential value, the processing and control unit 17 activates the mixing means 30.

The second heat-carrying fluid 13 exits from the respective second geothermal probes 14 covering the second delivery sections 39.

In detail, the second heat-carrying fluid 13 enters the second equalizing means 41, 42 which define the second offset temperature T"c before passing through the auxiliary delivery duct 27 and entering the delivery duct 19.

The mixing of the first heat-carrying fluid 10 and the second heat-carrying fluid 13 makes it possible to increase thermal capacity, i.e., the enthalpy, of the heat-carrying fluid 10, 13 which flows inside the coil 22; this makes it possible to maintain the surface temperature Ts between the lower limit value T_{I} and the upper limit value Ts.

At this point, the first heat-carrying fluid 10 mixed with the second heat-carrying fluid 13 runs through the coil 22, heating the pavement 5.

Finally, the first heat-carrying fluid 10 and the second heat-carrying fluid 13 come out of the coil 22 and enter the delivery duct 19 to return into the first exchanger assembly 9 and into the second exchanger assembly 12. Furthermore, when the processing and control unit 17 receives the fourth ice risk parameter P^{IV}_{R}, it is adapted to send the emergency signal 49 to the operator.

At the same time, during the summer season, the surface temperature Ts is above the first offset temperature T'c.

In this case, the processing and control unit 17 is in the accumulation configuration (Figure 1).

In this case, the first heat-carrying fluid 10 flows inside the delivery duct 19 and the coil 22, absorbing heat from the pavement 5 which cools down.

Under these conditions, the first heat-carrying fluid 10 coming out of the coil 22 flows inside the return duct 20 entering the respective first return sections 32, and then, the first geothermal probes 11.

Once the saturation level of the first exchanger assembly 9 has been reached, the processing and control unit 17 activates the auxiliary valve means 38 which direct the first heat-carrying fluid 10 to the second exchanger assembly 12.

It is easy to appreciate that the second exchanger assembly 12 acts as an auxiliary tank, increasing the thermal capacity of the system 1.

In addition, the presence of the third exchanger assembly 53 further increases the thermal capacity of the system 1.

In fact, once the saturation level of the second exchanger assembly 12 has been reached, the processing and control unit 17 activates the third valve means 58, 59 which direct the third heat-carrying fluid 54 to the third exchanger assembly 53.

The operation of the third exchanger assembly 53 is completely similar to that of the second exchanger assembly 12, the full description of which should be fully referred to.

It has in practice been ascertained that the described invention achieves the intended objects.

The fact is underlined that the particular solution of providing for a first exchanger assembly and a second exchanger assembly operationally connected to a processing and control unit preset with predefined temperature limit values allows keeping the road pavement at isothermal and/or para-isothermal conditions.

Furthermore, the fact of keeping the pavement at isothermal and/or para-isothermal conditions considerably reduces maintenance work on the pavement itself, increasing its duration over time.

In addition, the exploitation of geothermal heat eliminates the need to use chemical products, avoiding the risk of environmental contamination derived from the use of the same.

Furthermore, the particular measure of providing for the calculation of an ice risk parameter makes it possible to maintain the road pavement in safe driving conditions, considerably reducing the risk of accidents.

## Claims

1. System (1) for the heating and maintenance in temperature of road pavements, comprising:
- temperature detection means (2, 3, 4) which are associated with a road pavement (5) and configured to detect at least one value of surface temperature (Ts);
- at least a first buried exchanger assembly (9) and comprising at least a first heat-carrying fluid (10) adapted to exchange heat with the subsoil;
- at least a first detection sensor (15) associated with said first exchanger assembly (9) and configured to detect a first offset temperature (T'c) of said first heat-carrying fluid (10);
- a transmission circuit (19, 20) of the heat connected to said at least one first exchanger assembly (9) and to said pavement (5), said at least one first heat-carrying fluid (10) flowing inside said transmission circuit (19, 20) and being able to exchange heat with said pavement (5);
**characterized by** the fact that it comprises:
- at least a second exchanger assembly (12) comprising at least a second heat-carrying fluid (13);
- at least a second detection sensor (16) associated with said second exchanger assembly (12) and configured to detect at least a second compensation temperature (T"c) of said second heat-carrying fluid (13);
wherein said transmission circuit (19, 20) comprises mixing means (30) connected to said second exchanger assembly (12) and activatable to allow the mixing of said first heat-carrying fluid (10) with said second heat-carrying fluid (13); and
by the fact that it comprises at least one processing and control unit (17) operatively connected to said detection means (2, 3, 4), to said first detection sensor (15), to said second detection sensor (16) and to said mixing means (30) and, in turn, comprising at least one storage unit (44) of at least one lower temperature limit value (L_{I}) and/or one upper temperature limit value (Ls), said processing and control unit (17) being configured to command said transmission circuit (19, 20) to maintain said surface temperature (Ts) between said lower limit value (Li) and said upper limit value (Ls).

2. System (1) according to claim 1, **characterized by** the fact that said transmission circuit (19, 20) comprises at least one delivery duct (19) connected to at least one of said first exchanger assembly (9) and said second exchanger assembly (12) and to said pavement (5), and at least one return duct (20) connected to said pavement (5) and at least one of said first exchanger assembly (9) and said second exchanger assembly (12).

3. System (1) according to one or more of the preceding claims, **characterized by** the fact that said processing and control unit (17) comprises an accumulation configuration in which said surface temperature (Ts) is higher than said first offset temperature (T'c), and said pavement (5) transfers heat to at least one of said first heat-carrying fluid (10) and said second heat-carrying fluid (13) entering respectively said first exchanger assembly (9) and said second exchanger assembly (12).

4. System (1) according to claim 3, **characterized by** the fact that in said accumulation configuration at least one of said first heat-carrying fluid (10) and said second heat-carrying fluid (13) flows:
- inside said delivery duct (19) by absorbing heat from said pavement (5); and
- inside said return duct (20) by transferring heat to at least one of said first exchanger assembly (9) and said second exchanger assembly (12).

5. System (1) according to one or more of the preceding claims, **characterized by** the fact that said processing and control unit (17) comprises an offset configuration in which said surface temperature (Ts) is lower than said first offset temperature (T'c) and said first heat-carrying fluid (10) exiting from at least one of said first exchanger assembly (9) and said second exchanger assembly (12) transfers heat to said pavement (5).

6. System (1) according to claim 5, **characterized by** the fact that in said offset configuration at least one of said first heat-carrying fluid (10) and said second heat-carrying fluid (13) flows:
- inside said delivery duct (19) by transferring heat to said pavement (5); and
- inside said return duct (20) by absorbing heat from at least one of said first exchanger assembly (9) and said second exchanger assembly (12).

7. System (1) according to one or more of the preceding claims, **characterized by** the fact that said processing and control unit (17) comprises processing means (45) of at least one differential value between said value of surface temperature (Ts) and said first offset temperature (T'c).

8. System (1) according to one or more of the preceding claims, **characterized by** the fact that said processing and control unit (17) comprises comparison means (46) preset with at least one limit differential value, and configured to compare the latter with said differential value, said mixing means (30) being activated when said differential value exceeds said limit differential value.

9. System (1) according to one or more of the preceding claims, **characterized by** the fact that said plurality of sensors (2, 3, 4) comprises:
- at least a first sensor (2) associated with said pavement (5) at a first predefined depth (6);
- at least a second sensor (3) associated with said pavement (5) at a second predefined depth (7);
- at least a third sensor (4) associated with said pavement (5) at a third predefined depth (8);
and wherein said first depth (6), said second depth (7) and said third depth (8) are different from each other.

10. System (1) according to one or more of the preceding claims, **characterized by** the fact that it comprises at least one ice presence sensor (47) associated with said pavement (5), which is adapted to detect at least one wettability parameter (P_{B}) of the latter and operatively connected to said processing and control unit (17).

11. System (1) according to one or more of the preceding claims, **characterized by** the fact that said processing and control unit (17) comprises calculation means (48) for calculating at least one ice risk parameter (P^{I}_{R}, P^{II}_{R}, P^{III}_{R}, P^{IV}_{R}) of said pavement (5), said detection means (2, 3, 4) and said ice presence sensor (47) being operatively connected to said processing and control unit (17).

12. System (1) according to one or more of the preceding claims, **characterized by** the fact that said calculation means (48) are adapted to process a plurality of ice risk parameters (P^{I}_{R}, P^{II}_{R}, P^{III}_{R}, P^{IV}_{R}) comprising:
- at least a first negative ice risk parameter (P^{I}_{R}) in which said surface temperature (Ts) is lower than 0°C and said wettability parameter (P_{B}) is negative;
- at least a second negative ice risk parameter (P^{II}_{R}) in which said surface temperature (Ts) is lower than 0°C and said wettability parameter (P_{B}) is positive;
- at least a third negative ice risk parameter (P^{III}_{R}) in which said surface temperature (Ts) is higher than 0°C and said wettability parameter (P_{B}) is negative;
- at least a fourth positive ice risk parameter (P^{IV}_{R}) in which said surface temperature (Ts) is lower than 0°C and said wettability parameter (P_{B}) is positive.

13. System (1) according to one or more of the preceding claims, **characterized by** the fact that said first exchanger assembly (9) comprises first geothermal probes (11).

14. System (1) according to one or more of the preceding claims, **characterized by** the fact that said second exchanger assembly (12) is buried and comprises second geothermal probes (14).

15. System (1) according to one or more of the preceding claims, **characterized by** the fact that said second exchanger assembly (12) is associated with heat introduction means (60).

## Patentansprüche

1. System (1) für die Erwärmung und Temperaturerhaltung von Straßenbelägen, umfassend:
- Temperaturerfassungsmittel (2, 3, 4), die mit einem Straßenbelag (5) verbunden und ausgebildet sind, mindestens einen Wert einer Oberflächentemperatur (Ts) zu erfassen,
- mindestens eine erste vergrabene Tauscheranordnung (9), die mindestens ein erstes wärmetragendes Fluid (10) umfasst, das zum Wärmeaustausch mit dem Untergrund ausgebildet ist;
- mindestens einen ersten Erfassungssensor (15), der mit der ersten Tauscheranordnung (9) verbunden und ausgebildet ist, eine erste Offset-Temperatur (T'c) des ersten wärmetragenden Fluids (10) zu erfassen,
- einen Wärmeübertragungskreislauf (19, 20), der mit der mindestens einen ersten Tauscheranordnung (9) und mit dem Belag (5) verbunden ist, wobei das mindestens eine erste wärmetragende Fluid (10) in dem Übertragungskreislauf (19, 20) fließt und in der Lage ist, Wärme mit dem Belag (5) auszutauschen;
**dadurch gekennzeichnet, dass** es umfasst:
- mindestens eine zweite Tauscheranordnung (12), die mindestens ein zweites wärmetragendes Fluid (13) enthält;
- mindestens einen zweiten Erfassungssensor (16), der mit der zweiten Tauscheranordnung (12) verbunden und ausgebildet ist, mindestens eine zweite Kompensationstemperatur (T"c) des zweiten wärmetragenden Fluids (13) zu erfassen,
wobei der Übertragungskreislauf (19, 20) Mischmittel (30) umfasst, die mit der zweiten Tauscheranordnung (12) verbunden und aktivierbar sind, um das Mischen des ersten wärmetragenden Fluids (10) mit dem zweiten wärmetragenden Fluid (13) zu ermöglichen; und
dadurch, dass es mindestens eine Verarbeitungs- und Steuereinheit (17) umfasst, die mit den Erfassungsmitteln (2, 3, 4), dem ersten Erfassungssensor (15), dem zweiten Erfassungssensor (16) und den Mischmitteln (30) in Wirkverbindung steht und ihrerseits mindestens eine Speichereinheit (44) für mindestens einen unteren Temperaturgrenzwert (Li) und/oder einen oberen Temperaturgrenzwert (Ls) umfasst, wobei die Verarbeitungs- und Steuereinheit (17) ausgebildet ist, den Übertragungskreislauf (19, 20) anzuweisen, die Oberflächentemperatur (Ts) zwischen dem unteren Grenzwert (Li) und dem oberen Grenzwert (Ls) zu halten.

2. System (1) nach Anspruch 1, **dadurch gekennzeichnet, dass** der Übertragungskreislauf (19, 20) mindestens eine Zuführungsleitung (19) umfasst, die mit der ersten Tauscheranordnung (9) und/oder der zweiten Tauscheranordnung (12) und mit dem Belag (5) verbunden ist, und mindestens eine Rückführungsleitung (20), die mit dem Belag (5) und der ersten Tauscheranordnung (9) und/oder der zweiten Tauscheranordnung (12) verbunden ist.

3. System (1) nach einem oder mehreren der vorhergehenden Ansprüche, **dadurch gekennzeichnet, dass** die Verarbeitungs- und Steuereinheit (17) eine Akkumulationskonfiguration aufweist, in der die Oberflächentemperatur (Ts) höher ist als die erste Offset-Temperatur (T'c), und dass der Belag (5) Wärme an das erste wärmetragende Fluid (10) und/oder das zweite wärmetragende Fluid (13) überträgt, die in die erste Tauscheranordnung (9) bzw. die zweite Tauscheranordnung (12) eintreten.

4. System (1) nach Anspruch 3, **dadurch gekennzeichnet, dass** in der Akkumulationskonfiguration das erste wärmetragende Fluid (10) und/oder das zweite wärmetragende Fluid (13)
- innerhalb der Zuführungsleitung (19) unter Absorption von Wärme von dem Belag (5); und
- innerhalb der Rückführungsleitung (20) unter Übertragung von Wärme an die erste Tauscheranordnung (9) und/oder die zweite Tauscheranordnung (12) fließt.

5. System (1) nach einem oder mehreren der vorhergehenden Ansprüche, **dadurch gekennzeichnet, dass** die Verarbeitungs- und Steuereinheit (17) eine Offset-Konfiguration aufweist, in der die Oberflächentemperatur (Ts) niedriger ist als die erste Offset-Temperatur (T'c) und das erste wärmetragenden Fluid (10), das aus der ersten Tauscheranordnung (9) und/oder der zweiten Tauscheranordnung (12) austritt, Wärme an den Belag (5) überträgt.

6. System (1) nach Anspruch 5, **dadurch gekennzeichnet, dass** in der Offset-Konfiguration das erste wärmetragende Fluid (10) und/oder das zweite wärmetragende Fluid (13)
- innerhalb der Zuführungsleitung (19) unter Übertragung von Wärme an den Belag (5); und
- in der Rückführungsleitung (20) unter Absorption von Wärme aus der ersten Tauscheranordnung (9) und/oder der zweiten Tauscheranordnung (12) fließt.

7. System (1) nach einem oder mehreren der vorhergehenden Ansprüche, **dadurch gekennzeichnet, dass** die Verarbeitungs- und Steuereinheit (17) Mittel (45) zur Verarbeitung mindestens eines Differenzwertes zwischen dem Wert der Oberflächentemperatur (Ts) und der ersten Offset-Temperatur (T'c) umfasst.

8. System (1) nach einem oder mehreren der vorhergehenden Ansprüche, **dadurch gekennzeichnet, dass** die Verarbeitungs- und Steuereinheit (17) Vergleichsmittel (46) umfasst, die mit mindestens einem Grenzdifferenzwert voreingestellt und ausgebildet sind, diesen mit dem Differenzwert zu vergleichen, wobei die Mischmittel (30) aktiviert werden, wenn der Differenzwert den Grenzdifferenzwert überschreitet.

9. System (1) nach einem oder mehreren der vorhergehenden Ansprüche, **dadurch gekennzeichnet, dass** die Vielzahl von Sensoren (2, 3, 4) umfasst:
- mindestens einen ersten Sensor (2), der mit dem Belag (5) in einer ersten vordefinierten Tiefe (6) verbunden ist;
- mindestens einen zweiten Sensor (3), der mit dem Belag (5) in einer zweiten vordefinierten Tiefe (7) verbunden ist;
- mindestens einen dritten Sensor (4), der mit dem Belag (5) in einer dritten vordefinierten Tiefe (8) verbunden ist;
und wobei die erste Tiefe (6), die zweite Tiefe (7) und die dritte Tiefe (8) voneinander verschieden sind.

10. System (1) nach einem oder mehreren der vorhergehenden Ansprüche, **dadurch gekennzeichnet, dass** es mindestens einen dem Belag (5) zugeordneten Eispräsenzsensor (47) umfasst, der ausgebildet ist, mindestens einen Feuchtigkeitsparameter (P_{B}) des Belags (5) zu erfassen, und der mit der Verarbeitungs- und Steuereinheit (17) in Wirkverbindung steht.

11. System (1) nach einem oder mehreren der vorhergehenden Ansprüche, **dadurch gekennzeichnet, dass** die Verarbeitungs- und Steuereinheit (17) Berechnungsmittel (48) zum Berechnen mindestens eines Eisrisikoparameters (P^{I}_{R}, P^{II}_{R}, P^{III}_{R}, P^{IV}_{R}) des Belags (5) umfasst, wobei die Erfassungsmittel (2, 3, 4) und der Eispräsenzsensor (47) mit der Verarbeitungs- und Steuereinheit (17) in Wirkverbindung stehen.

12. System (1) nach einem oder mehreren der vorhergehenden Ansprüche, **dadurch gekennzeichnet, dass** die Berechnungsmittel (48) ausgebildet sind, eine Vielzahl von Eisrisikoparametern (P^{I}_{R}, P^{II}_{R}, P^{III}_{R}, P^{IV}_{R}) zu verarbeiten, umfassend
- mindestens einen ersten negativen Eisrisikoparameter (P^{I}_{R}), bei dem die Oberflächentemperatur (Ts) niedriger als 0°C und der Feuchtigkeitsparameter (P_{B}) negativ ist;
- mindestens einen zweiten negativen Eisrisikoparameter (P^{II}_{R}), bei dem die Oberflächentemperatur (Ts) niedriger als 0°C und der Feuchtigkeitsparameter (P_{B}) positiv ist;
- mindestens einen dritten negativen Eisrisikoparameter (P^{III}_{R}), bei dem die Oberflächentemperatur (Ts) höher als 0°C ist und der Feuchtigkeitsparameter (P_{B}) negativ ist;
- mindestens einen vierten positiven Eisrisikoparameter (P^{IV}_{R}), bei dem die Oberflächentemperatur (Ts) niedriger als 0°C und der Feuchtigkeitsparameter (P_{B}) positiv ist.

13. System (1) nach einem oder mehreren der vorhergehenden Ansprüche, **dadurch gekennzeichnet, dass** die erste Tauscheranordnung (9) erste Erdwärmesonden (11) umfasst.

14. System (1) nach einem oder mehreren der vorhergehenden Ansprüche, **dadurch gekennzeichnet, dass** die zweite Tauscheranordnung (12) vergraben ist und zweite Erdwärmesonden (14) umfasst.

15. System (1) nach einem oder mehreren der vorangehenden Ansprüche, **dadurch gekennzeichnet, dass** die zweite Tauscheranordnung (12) mit Wärmeeinleitmitteln (60) verbunden ist.

## Revendications

1. - Système (1) pour le chauffage et le maintien en température de chaussées routières, comprenant :
- des moyens de détection de température (2, 3, 4) qui sont associés à une chaussée routière (5) et configurés pour détecter au moins une valeur de température de surface (T_{S}) ;
- au moins un premier ensemble échangeur enterré (9) et comprenant au moins un premier fluide caloporteur (10) apte à échanger de la chaleur avec le sous-sol ;
- au moins un premier capteur de détection (15) associé audit premier ensemble échangeur (9) et configuré pour détecter une première température de décalage (T'c) dudit premier fluide caloporteur (10) ;
- un circuit de transmission (19, 20) de la chaleur relié audit au moins un premier ensemble échangeur (9) et à ladite chaussée (5), ledit au moins un premier fluide caloporteur (10) s'écoulant à l'intérieur dudit circuit de transmission (19, 20) et étant apte à échanger de la chaleur avec ladite chaussée (5) ;
**caractérisé par le fait qu'**il comprend :
- au moins un second ensemble échangeur (12) comprenant au moins un second fluide caloporteur (13) ;
- au moins un deuxième capteur de détection (16) associé audit second ensemble échangeur (12) et configuré pour détecter au moins une seconde température de compensation (T"c) dudit second fluide caloporteur (13) ;
ledit circuit de transmission (19, 20) comprenant des moyens de mélange (30) reliés audit second ensemble échangeur (12) et activables pour permettre le mélange dudit premier fluide caloporteur (10) avec ledit second fluide caloporteur (13) ; et
**par le fait qu'**il comprend au moins une unité de traitement et de commande (17) reliée de manière fonctionnelle auxdits moyens de détection (2, 3, 4), audit premier capteur de détection (15), audit deuxième capteur de détection (16) et auxdits moyens de mélange (30) et, à son tour, comprenant au moins une unité de stockage (44) d'au moins une valeur limite de température inférieure (L_{I}) et/ou une valeur limite de température supérieure (Ls), ladite unité de traitement et de commande (17) étant configurée pour commander ledit circuit de transmission (19, 20) de façon à maintenir ladite température de surface (Ts) entre ladite valeur limite inférieure (L_{I}) et ladite valeur limite supérieure (L_{S}).

2. - Système (1) selon la revendication 1, **caractérisé par le fait que** ledit circuit de transmission (19, 20) comprend au moins un conduit de distribution (19) relié à au moins un dudit premier ensemble échangeur (9) et dudit second ensemble échangeur (12) et à ladite chaussée (5), et au moins un conduit de retour (20) relié à ladite chaussée (5) et à au moins un dudit premier ensemble échangeur (9) et dudit second ensemble échangeur (12).

3. - Système (1) selon une ou plusieurs des revendications précédentes, **caractérisé par le fait que** ladite unité de traitement et de commande (17) comprend une configuration d'accumulation dans laquelle ladite température de surface (Ts) est supérieure à ladite première température de décalage (T'c), et ladite chaussée (5) transfère de la chaleur à au moins un dudit premier fluide caloporteur (10) et dudit second fluide caloporteur (13) entrant respectivement dans ledit premier ensemble échangeur (9) et ledit second ensemble échangeur (12).

4. - Système (1) selon la revendication 3, **caractérisé par le fait que**, dans ladite configuration d'accumulation, au moins un dudit premier fluide caloporteur (10) et dudit second fluide caloporteur (13) s'écoule :
- à l'intérieur dudit conduit de distribution (19) en absorbant de la chaleur provenant de la chaussée (5) ; et
- à l'intérieur dudit conduit de retour (20) en transférant de la chaleur à au moins un dudit premier ensemble échangeur (9) et dudit second ensemble échangeur (12).

5. - Système (1) selon une ou plusieurs des revendications précédentes, **caractérisé par le fait que** ladite unité de traitement et de commande (17) comprend une configuration de décalage dans laquelle ladite température de surface (T_{S}) est inférieure à ladite première température de décalage (T'c) et ledit premier fluide caloporteur (10) sortant d'au moins un dudit premier ensemble échangeur (9) et dudit second ensemble échangeur (12) transfère de la chaleur à ladite chaussée (5).

6. - Système (1) selon la revendication 5, **caractérisé par le fait que**, dans ladite configuration de décalage, au moins un dudit premier fluide caloporteur (10) et dudit second fluide caloporteur (13) s'écoule :
- à l'intérieur dudit conduit de distribution (19) en transférant de la chaleur à ladite chaussée (5) ; et
- à l'intérieur dudit conduit de retour (20) en absorbant de la chaleur provenant d'au moins un dudit premier ensemble échangeur (9) et dudit second ensemble échangeur (12).

7. - Système (1) selon une ou plusieurs des revendications précédentes, **caractérisé par le fait que** ladite unité de traitement et de commande (17) comprend des moyens de traitement (45) d'au moins une valeur différentielle entre ladite valeur de température de surface (Ts) et ladite première température de décalage (T'c) .

8. - Système (1) selon une ou plusieurs des revendications précédentes, **caractérisé par le fait que** ladite unité de traitement et de commande (17) comprend des moyens de comparaison (46) préréglés avec au moins une valeur différentielle limite, et configurés pour comparer cette dernière à ladite valeur différentielle, lesdits moyens de mélange (30) étant activés lorsque ladite valeur différentielle dépasse ladite valeur différentielle limite.

9. - Système (1) selon une ou plusieurs des revendications précédentes, **caractérisé par le fait que** ladite pluralité de capteurs (2, 3, 4) comprennent :
- au moins un premier capteur (2) associé à ladite chaussée (5) à une première profondeur prédéfinie (6) ;
- au moins un deuxième capteur (3) associé à ladite chaussée (5) à une deuxième profondeur prédéfinie (7) ;
- au moins un troisième capteur (4) associé à ladite chaussée (5) à une troisième profondeur prédéfinie (8) ;
et la première profondeur (6), la deuxième profondeur (7) et la troisième profondeur (8) étant différentes les unes des autres.

10. - Système (1) selon une ou plusieurs des revendications précédentes, **caractérisé par le fait qu'**il comprend au moins un capteur de présence de verglas (47) associé à ladite chaussée (5), qui est agencé pour détecter au moins un paramètre de mouillabilité (P_{B}) de cette dernière et relié de manière fonctionnelle à ladite unité de traitement et de commande (17).

11. - Système (1) selon une ou plusieurs des revendications précédentes, **caractérisé par le fait que** ladite unité de traitement et de commande (17) comprend des moyens de calcul (48) pour calculer au moins un paramètre de risque de verglas (P^{I}_{R}, P^{II}_{R}, P^{III}_{R}, P^{IV}_{R}) de ladite chaussée (5), lesdits moyens de détection (2, 3, 4) et ledit capteur de présence de verglas (47) étant reliés de manière fonctionnelle à ladite unité de traitement et de commande (17).

12. - Système (1) selon une ou plusieurs des revendications précédentes, **caractérisé par le fait que** lesdits moyens de calcul (48) sont agencés pour traiter une pluralité de paramètres de risque de verglas (P^{I}_{R}, P^{II}_{R}, P^{III}_{R}, P^{IV}_{R}) comprenant :
- au moins un premier paramètre de risque de verglas négatif (P^{I}_{R}) dans lequel ladite température de surface (T_{S}) est inférieure à 0°C et ledit paramètre de mouillabilité (P_{B}) est négatif ;
- au moins un deuxième paramètre de risque de verglas négatif (P^{II}_{R}) dans lequel ladite température de surface (T_{S}) est inférieure à 0°C et ledit paramètre de mouillabilité (P_{B}) est positif ;
- au moins un troisième paramètre de risque de verglas négatif (P^{III}_{R}) dans lequel ladite température de surface (T_{S}) est supérieure à 0°C et ledit paramètre de mouillabilité (P_{B}) est négatif ;
- au moins un quatrième paramètre de risque de verglas positif (P^{IV}_{R}) dans lequel ladite température de surface (T_{S}) est inférieure à 0°C et ledit paramètre de mouillabilité (P_{B}) est positif.

13. - Système (1) selon une ou plusieurs des revendications précédentes, **caractérisé par le fait que** ledit premier ensemble échangeur (9) comprend des premières sondes géothermiques (11).

14. - Système (1) selon une ou plusieurs des revendications précédentes, **caractérisé par le fait que** ledit second ensemble échangeur (12) est enterré et comprend des secondes sondes géothermiques (14).

15. - Système (1) selon une ou plusieurs des revendications précédentes, **caractérisé par le fait que** ledit second ensemble échangeur (12) est associé à des moyens d'introduction de chaleur (60).
